# EUROPEAN PATENT APPLICATION

(11) **EP 2 858 298 A1**
(43) Date of publication of application: **08.04.2015**
(21) Application number: 13794161.3
(22) Date of filing: 19.04.2013
(51) Int. Cl.: H04L 9/32

(54) **AUTHORIZATION CHECK METHOD AND SYSTEM FOR ELECTRONIC SIGNATURE TOOL, AND ELECTRONIC SIGNATURE TOOL**

(30) Priority: 25.05.2012 CN 201210168106
(71) Applicant: Tendyron Corporation, Beijing 100083 (CN)
(72) Inventor: LI, Dongsheng, Beijing 100083 (CN)
(74) Representative: Pizzoli, Antonio
(86) International application number: PCT/CN2013/074459
(87) International publication number: WO 2013/174187

(57) **Abstract**

Proposed are an authorization check method and device for an electronic signature tool. The method comprises: a first electronic signature tool sending an authorization request to a second electronic signature tool; the second electronic signature tool generating corresponding authorization information according to the authorization request, and feeding back the authorization information to the first electronic signature tool; the first electronic signature tool judging whether to enter a secure state according to the authorization information; and if it is judged to enter the secure state, the first electronic signature tool opening a signature function. In the present invention, through the interaction between a second electronic signature tool and a first electronic signature tool, a trader can complete a transaction when an authorizer is not at his/her side, thereby increasing the convenience of use of electronic signature tools, reducing the risk of the trader transferring accounts to a company secretly, and increasing the security of the electronic transaction of the company.

## Description

### FIELD

The present disclosure relates to an information security field, and more particularly to an authorization checking method and system for an electronic signature token.

### BACKGROUND

At present, with the popularization of ebanking, the electronic signature token connected with the trade terminal via a USB (Universal Serial Bus) interface is increasingly used. A conventional method for using the electronic signature comprises steps of: connecting the electronic signature token with the trade terminal by a user; receiving the trade instruction and the trade information and generating a corresponding trade message by the trade terminal; sending the trade message to the electronic signature token; extracting specific trade information from the trade message and displaying the specific trade information to the user by the electronic signature token; after it is determined by the user that the trade information is correct, activating the generation, authentication, encryption and decryption of the electronic signature by pressing a confirmation key on the electronic signature token and sending the results to the trade terminal so as to finish the corresponding electronic trade.

However, for no matter the individual user or the enterprise user, there is only one electronic signature token for one corresponding account. Therefore, the current enterprise ebanking electronic signature token has at least following disadvantages.
(1) The enterprise ebanking electronic signature token and the trade password are managed by a same person, such that a security risk that the enterprise account is transferred by the person secretly may exist.
(2) Since there is only one enterprise ebanking electronic signature token and it was managed by one person, the person must be in site for each electronic trade, otherwise, the trade cannot be accomplished, thus causing a significant inconvenience to the enterprise.

### SUMMARY

Embodiments of the present disclosure seek to solve at least one of above problems.

Accordingly, a first objective of the present disclosure is to provide an authorization checking method for an electronic signature token.

A second objective of the present disclosure is to provide an authorization checking system for an electronic signature token.

A third objective of the present disclosure is to provide an electronic signature token for signature.

A fourth objective of the present disclosure is to provide an electronic signature token for authorization.

A fifth objective of the present disclosure is to provide an authorization checking system for an electronic signature token.

A sixth objective of the present disclosure is to provide an authorization checking method for an electronic signature token.

A seventh objective of the present disclosure is to provide an authorization checking system for an electronic signature token.

In order to achieve the above objectives, the authorization checking method for the electronic signature token according to embodiments of a first aspect of the present disclosure comprises following steps: sending by a first electronic signature token an authorization request to a second electronic signature token; generating a corresponding authorization information according to the authorization request, and feeding back the authorization information to the first electronic signature token by the second electronic signature token; determining whether to enter a security state by the first electronic signature token according to the authorization information; and if it is determined that the first electronic signature token has entered the security state, activating a signature function by the first electronic signature token.

With the authorization checking method for the electronic signature token according to embodiments of the present disclosure, the first electronic signature token is authorized by the second electronic signature token, and an electronic trade is signed by the first electronic signature token, such that the electronic trade may be accomplished by a trader in absence of an authorizer. Therefore, a use convenience of the electronic signature token is improved, a risk of personal transferring of an enterprise account by the trader is reduced, and a security of an electronic trade of the enterprise is improved.

In order to achieve the above objectives, the authorization checking system for the electronic signature token according to embodiments of a second aspect of the present disclosure comprises: a first electronic signature token configured to send an authorization request to a second electronic signature token, to determine whether to enter a security state according to an authorization information fed back by the second electronic signature token, and to perform a payment with signature according to an information of a trade after determining the first signature tool has entered the security state; and the second electronic signature token configured to generate the corresponding authorization information according to the authorization request, and to feed back the authorization information to the first electronic signature token.

With the authorization checking system for the electronic signature token according to embodiments of the present disclosure, the authorization request is sent to the second electronic signature token by the first electronic signature token, the authorization information is fed back to the first electronic signature token by the second electronic signature token, and a signature authentication is performed by the first electronic signature token, such that the electronic trade may be accomplished even that an authorizer and a trader are not in a same place. Therefore, a use convenience of the electronic signature token is improved, a risk of personal transferring of an enterprise account by the trader is reduced, and a security of an electronic trade of the enterprise is improved.

In order to achieve the above objectives, the electronic signature token for signature according to embodiments of a third aspect of the present disclosure comprises: a sending module configured to send an authorization request to an electronic signature token for authorization; a receiving module configured to receive an authorization information fed back by the electronic signature token for authorization; and a state control module configured to determine whether to enter a security state according to the authorization information, and to perform a payment with signature after determining the security state is entered.

With the electronic signature token for signature according to embodiments of the present disclosure, the authorization request is sent by the sending module, the authorization information is received by the receiving module, and whether to enter the security state is controlled by the state control module. Therefore, a security of the electronic signature token is improved.

In order to achieve the above objectives, the electronic signature token for authorization according to embodiments of a fourth aspect of the present disclosure comprises: a receiving module configured to receive an authorization request sent by an electronic signature token for signature; a generating module configured to generate a corresponding authorization information according to the authorization request; and a sending module configured to feed back the authorization information to the electronic signature token for signature.

With the electronic signature token for authorization according to embodiments of the present disclosure, the authorization request is received by the receiving module, the corresponding authorization information is generated by the generating module, and the authorization information is sent by the sending module. Therefore, a security and an availability of the electronic signature token are improved.

In order to achieve the above objectives, the authorization checking system for the electronic signature token according to embodiments of a fifth aspect of the present disclosure comprises: a first electronic signature token, a second electronic signature token, a first terminal connected with the first electronic signature token, and a second terminal connected with the second electronic signature token, the first terminal and the second terminal communicating with each other, wherein the first electronic signature token is configured to generate an authorization request, to send the authorization request to the first terminal, to receive an authorization information fed back by the first terminal, and to perform a payment with signature after determining a security state is entered according to the authorization information; the first terminal is configured to send the authorization request to the second terminal, and to forward the authorization information sent by the second terminal to the first electronic signature token; the second terminal is configured to forward the authorization request to the second electronic signature token, and to forward the authorization information to the first terminal; the second electronic signature token is configured to generate the corresponding authorization information according to the authorization request, and to send the authorization information to the second terminal.

With the authorization checking system for the electronic signature token according to embodiments of the present disclosure, a signing for an electronic trade is accomplished by the first electronic signature token connected to the first terminal and the second electronic signature token connected to the second terminal, and the two terminals communicate with each other. Therefore, a usability and a security of the system are improved.

In order to achieve the above objectives, the authorization checking method for the electronic signature token according to embodiments of a sixth aspect of the present disclosure comprises following steps: sending by a first electronic signature token an authorization request including a request information from to a second electronic signature token via a network, when the first electronic signature token needs to execute a signature function; authorizing the authorization request sent by the first electronic signature token and feeding back the authorization information to the first electronic signature token by the second electronic signature token; decrypting the authorization information and performing a match verification between the decrypted authorization information and the request information to determine whether the authorizing is successful by the first electronic signature token; if it is determined that the authorizing is successful, entering a security state; if it is determined that the authorizing is unsuccessful, disallowing to enter the security state.

With the authorization checking method for the electronic signature token according to embodiments of the present disclosure, the authorization request is sent by the first electronic signature token, the first electronic signature token is authorized by the second electronic signature token, and a signing for the electronic trade is accomplished by the first electronic signature token. Therefore, a security and a convenience of an electronic trade of the enterprise account are improved.

In order to achieve the above objectives, the authorization checking system for the electronic signature token according to embodiments of a seventh aspect of the present disclosure comprises: one or more first electronic signature tokens and one or more second electronic signature tokens, wherein the first electronic signature tokens are configured to send an authorization request including a random number to the second electronic signature tokens when performing a signing for an electronic trade, to determine whether a signature is correct according to an authorization information fed back by the second electronic signature tokens, and to enter a security state to perform the signing for the electronic trade; and the second electronic signature tokens are configured to generate the corresponding authorization information according to the authorization request sent by the first electronic signature tokens, and to feed back the authorization information to the first electronic signature tokens.

With the authorization checking system for the electronic signature token according to embodiments of the present disclosure, the authorization request is sent by the first electronic signature token, the first electronic signature token is authorized by the second electronic signature token, and a signing for an electronic trade is accomplished by the first electronic signature token. Therefore, a security and a convenience of an electronic trade of the enterprise are improved.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and/or other aspects and advantages of embodiments of the present disclosure will become apparent and more readily appreciated from the following descriptions made with reference to the drawings, in which:
Fig. 1 is a flow chart of an authorization checking method for an electronic signature token according to an embodiment of the present disclosure;
Fig. 2 is a flow chart of an authorization checking method for an electronic signature token according to an embodiment of the present disclosure;
Fig. 3 is a flow chart of an authorization checking method for an electronic signature token according to an embodiment of the present disclosure;
Fig. 4 is a structural schematic diagram of an authorization checking system for an electronic signature token according to an embodiment of the present disclosure;
Fig. 5 is a structural schematic diagram of an electronic signature token for signature according to an embodiment of the present disclosure;
Fig. 6 is a structural schematic diagram of an electronic signature token for signature according to an embodiment of the present disclosure;
Fig. 7 is a structural schematic diagram of an electronic signature token for signature according to an embodiment of the present disclosure;
Fig. 8 is a structural schematic diagram of an electronic signature token for authorization according to an embodiment of the present disclosure;
Fig. 9 is a structural schematic diagram of an authorization checking system for an electronic signature token according to an embodiment of the present disclosure;
Fig. 10 is a flow chart of an authorization checking method for an electronic signature token according to an embodiment of the present disclosure; and
Fig. 11 is a structural schematic diagram of an authorization checking system for an electronic signature token according to an embodiment of the present disclosure.

### DETAILED DESCRIPTION

Reference will be made in detail to embodiments of the present disclosure, and examples of the embodiments are shown in the drawings. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Instead, the embodiments of the present disclosure comprise all the variants, modifications and their equivalents within the spirit and scope of the present disclosure as defined by the claims.

An authorization checking method for an electronic signature token according to embodiments of the present disclosure will be described below with reference to the drawings.

The authorization checking method for the electronic signature token comprises following steps: sending by a first electronic signature token an authorization request to a second electronic signature token; generating a corresponding authorization information according to the authorization request, and feeding back the authorization information to the first electronic signature token by the second electronic signature token; determining whether to enter a security state by the first electronic signature token according to the authorization information; and activating a signature function by the first electronic signature token, if it is determined that the first electronic signature token has entered the security state.

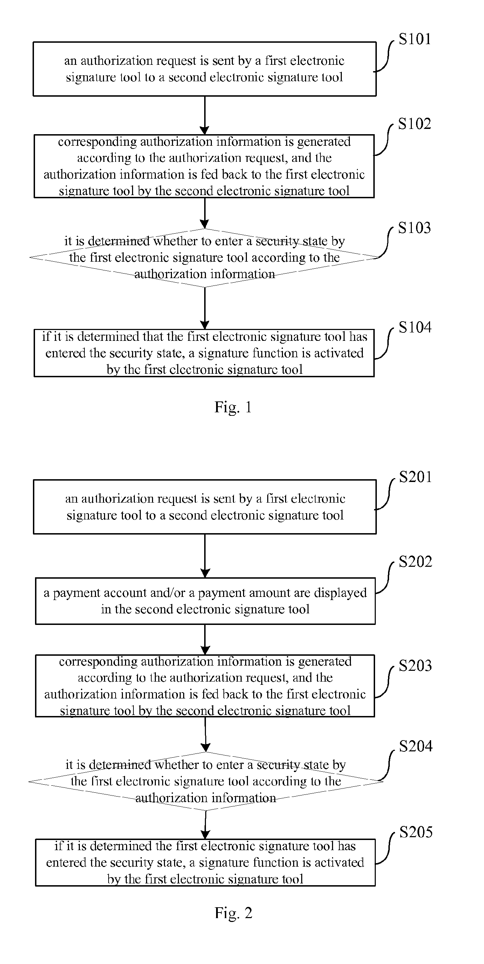

Fig. 1 is a flow chart of an authorization checking method for an electronic signature token according to an embodiment of the present disclosure.

As shown in Fig. 1, the authorization checking method for the electronic signature token according to embodiments of the present disclosure comprises following steps.

At step S101, an authorization request is sent to a second electronic signature token by a first electronic signature token.

Specifically, the authorization request is generated by the first electronic signature token during an electronic trade, and the authorization request is sent to the second electronic signature token by the first electronic signature token.

At step S102, corresponding authorization information is generated according to the authorization request, and the authorization information is fed back to the first electronic signature token by the second electronic signature token.

Specifically, the second electronic signature token receives the authorization request sent by the first electronic signature token, signs the authorization request, generates the authorization information according to signature information, and feeds back the authorization information to the first electronic signature token.

At step S103, it is determined whether to enter a security state by the first electronic signature token according to the authorization information.

In one embodiment of the present disclosure, the authorization request comprises a random number generated by the first electronic signature token, and the authorization information comprises the signature information generated by the second electronic signature token according to the random number.

Specifically, firstly the first electronic signature token decrypts the signature information to generate decryption information, and then the first electronic signature token detects whether the decryption information matches the random numbers generated thereby, and finally the first electronic signature token enters the security state, if it is determined that the decryption information matches the random number.

More specifically, the first electronic signature token decrypts the authorization information fed back by the second electronic signature token according to a predetermined secret key to generate a group of numbers, performs a match comparison between the group of numbers and the random numbers in the authorization request generated by the first electronic signature token. If the group of numbers and the random numbers fully matches with each other, it is determined that an authorization signature is successful and the first electronic signature token enters the security state.

At step S104, if it is determined that the first electronic signature token has entered the security state, a signature function is activated by the first electronic signature token.

Specifically, if the first electronic signature token has entered the security state, a signature authentication may be performed on a related electronic trade to accomplish the trade.

In one embodiment of the present disclosure, the first electronic signature token and the second electronic signature token have matched secret keys.

Specifically, the first electronic signature token and the second electronic signature token may adopt symmetrical to perform encryption or decryption, or asymmetrical secret keys to perform encryption or decryption.

More specifically, when the first electronic signature token decrypts the authorization information fed back by the second electronic signature token, the signature information is decrypted according to the secret keys. The predetermined secret keys in the electronic signature token may be symmetrical secret keys and/or symmetrical secret keys for decryption, or may be asymmetrical secret keys and/or asymmetrical secret keys for decryption.

In one embodiment of the present disclosure, the authorization request comprises a random number generated by the first electronic signature token, and the authorization information comprises the signature information generated by the second electronic signature token according to the random number.

In one embodiment of the present disclosure, the first electronic signature token provides the random number to a user via displaying or a voice prompt.

With the authorization checking method for the electronic signature token according to embodiments of the present disclosure, the second electronic signature token authorizes the first electronic signature token, the first electronic signature token signs an electronic trade, and the authorization information is verified by the random number, such that the electronic trade may be accomplished by a trader and in absence of an authorizer, and thus increasing a use convenience of the electronic signature token, reducing a risk of personal transferring of an enterprise account by the trader, and improving a security of an electronic trade of the enterprise account.

Fig. 2 is a flow chart of an authorization checking method for an electronic signature token according to another embodiment of the present disclosure.

As shown in Fig. 2, the authorization checking method for the electronic signature token according to embodiments of the present disclosure comprises following steps.

At step S201, an authorization request is sent by a first electronic signature token to a second electronic signature token.

At step S202, a payment account and/or a payment amount are displayed in the second electronic signature token.

Specifically, the second electronic signature token acquires information of an electronic trade according to the authorization request sent by the first electronic signature token, and displays the payment account and/or the payment amount on a screen of the second electronic signature token.

At step S203, corresponding authorization information is generated according to the authorization request, and the authorization information is fed back to the first electronic signature token by the second electronic signature token.

At step S204, it is determined whether to enter a security state by the first electronic signature token according to the authorization information.

Specifically, the first electronic signature token decrypts the signature information according to the secret keys to generate decryption information, the first electronic signature token detects whether the decryption information matches the payment account and/or the payment amount, and if it is determined that the decryption information matches the payment account and/or the payment amount, the first electronic signature token enters the security state.

More specifically, the first electronic signature token decrypts the authorization information fed back by the second electronic signature token according to a predetermined secret key to generate a group of information, performs a match comparison between the group of information and the information in the authorization request generated by the first electronic signature token, if the two groups of information fully matches with each other, it is determined that an authorization signature is successful and the first electronic signature token enters the security state.

At step S205, if it is determined that the first electronic signature token has entered the security state, a signature function is activated by the first electronic signature token.

Specific processes of the above steps S201, S203 and S205, which will not be introduced in detail herein, may refer to steps S101, S102 and S104.

In one embodiment of the present disclosure, the authorization request comprises a payment account and/or a payment amount of a trade, and the authorization information comprises signature information generated by the second electronic signature token according to the payment account and/or the payment amount.

Specifically, the payment account and/or the payment amount information of the electronic trade is added into the authorization request when the authorization request is generated by the first electronic signature token, and the related authorization information is generated according to the payment account and/or the payment amount when the authorization information is generated by the second electronic signature token.

In one embodiment of the present disclosure, after the first electronic signature token has entered the security state, the first electronic signature token performs a signing for the trade matched with the payment account and/or the payment amount according to the payment account and/or the payment amount, and exits from the security state after finishing the signing; when a next trade is performed, the first electronic signature token exits from the security state if a payment account and/or a payment amount of the next trade required to be signed mismatches the payment account and/or the payment amount.

Specifically, after entering the security state, the first electronic signature token may perform a match comparison between the payment account and/or the payment amount contained in the authorization information and a payment account and/or a payment amount required to be signed. If the payment account and/or the payment amount contained in the authorization information and the payment account and/or the payment amount required to be signed are identical, the first electronic signature token performs a signing for the trade and then exits from the security state. When a next trade needs to be signed, if the payment account and/or the payment amount of the next trade required to be signed mismatches the payment account and/or the payment amount contained in the authorization information received previously, the first electronic signature token exits from the security state automatically.

With the authorization checking method for the electronic signature token according to embodiments of the present disclosure, the communication information of the first electronic signature token and the second electronic signature token contains the electronic trade information. The information of the electronic trade may be shown to an authorizer via the second electronic signature token, and the second electronic signature token may be controlled to exit from the security state via the match comparison of the electronic trade information. Therefore, the electronic signature token is more humanistic, and a use convenience and a security of the electronic signature token are improved.

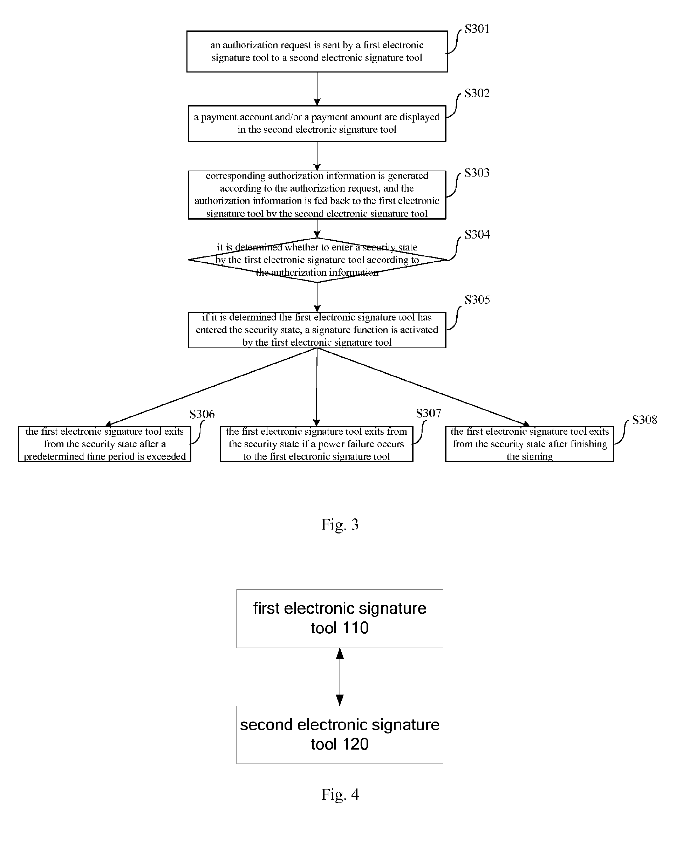

Fig. 3 is a flow chart of an authorization checking method for an electronic signature token according to another embodiment of the present disclosure.

As shown in Fig. 3, the authorization checking method for the electronic signature token according to embodiments of the present disclosure comprises following steps.

At step S301, an authorization request is sent by a first electronic signature token to a second electronic signature token.

At step S302, a payment account and/or a payment amount are displayed on the second electronic signature token.

At step S303, corresponding authorization information is generated according to the authorization request, and the authorization information is fed back to the first electronic signature token by the second electronic signature token.

At step S304, it is determined whether to enter a security state by the first electronic signature token according to the authorization information.

At step S305, if it is determined that the first electronic signature token has entered the security state, a signature function is activated by the first electronic signature token.

A specific process of steps S301- S305, which may refer to the description of steps S201-S205, will not be described in detail herein.

At step S306, the first electronic signature token exits from the security state when a predetermined time period is exceeded.

Specifically, after entering the security state, the first electronic signature token exits from the security state and thus the signing will not continue, if the predetermined time period is exceeded.

At step S307, alternatively, the first electronic signature token exits from the security state if a power failure occurs.

Specifically, after the first electronic signature token enters the security state and disconnects from a trade terminal, if a power failure occurs to the first electronic signature token, the first electronic signature token exits from the security state and thus the signing will not continue.

At step S308, alternatively, the first electronic signature token exits from the security state after finishing the signing.

Specifically, after entering the security state and finishing a signing for a corresponding electronic trade, the first electronic signature token exits from the security state and thus the signing will not continue.

In one embodiment of the present disclosure, there are a plurality of first electronic signature tokens, each of the plurality of first electronic signature tokens has a unique secrete key, and the second electronic signature token has a plurality of secrete keys matched with the secrete keys of the plurality of first electronic signature tokens.

Specifically, there may be a plurality of first electronic signature tokens, each of the plurality of first electronic signature tokens has a unique predetermined secrete key for decrypting which may be provided to a plurality of persons so as to perform trades in different places. And secrete keys matched with the secrete keys of all of the first electronic signature tokens are stored in the second electronic signature token, and thus the second electronic signature token may authorize different electronic signature tokens.

In one embodiment of the present disclosure, there are a plurality of second electronic signature tokens, each of the plurality of second electronic signature tokens has a unique secrete key, the first electronic signature token has a plurality of secrete keys matched with the secrete keys of the plurality of second electronic signature tokens, and the first electronic signature token sends the authorization request to the plurality of second electronic signature tokens respectively.

Specifically, there may be a plurality of second electronic signature tokens, a secrete key matched with the secrete key in each of the plurality of first electronic signature tokens is stored in each of the plurality of second electronic signature tokens, and may authorize different electronic signature tokens. If the first electronic signature token receives the authorization information from all of the second electronic signature tokens and the authorization information meets a requirement, the first electronic signature token enters the security state. Alternatively, if the first electronic signature token receives the authorization information from any one of the second electronic signature tokens and the authorization information meets a requirement, the first electronic signature token enters the security state.

For example, conditions for obtaining an authorization of the first electronic signature token may be set as follows: the first electronic signature token may enter the security state if the authorization information of all of the second electronic signature tokens is received, or the first electronic signature token may enter the security state if the authorization information of a part of the second electronic signature tokens is received, or the first electronic signature token may enter the security state if the authorization information of one of the second electronic signature tokens is received.

In one embodiment of the present disclosure, the first electronic signature token and the second electronic signature token communicate via a wire or wireless internet or a direct connection.

Specifically, the first electronic signature token may send the authorization request to the second electronic signature token and receive the authorization information via the internet, or the first electronic signature token and the second electronic signature token may exchange information via local direct connection instead of network transmission.

In one embodiment of the present disclosure, the second electronic signature token has a USB socket, and a USB plug of the first electronic signature token is inserted into the USB socket to establish a communication between the first electronic signature token and the second electronic signature token.

For example, if both the authorizer and the trader are at one place, internet connection is not necessary, instead, the first electronic signature token may be inserted into the USB socket of the second electronic signature token, and the second electronic signature token may be connected to the trade terminal, such that the first electronic signature token may be directly authorized to sign the electronic trade.

With the authorization checking method for the electronic signature token according to embodiments of the present disclosure, after entering the security state, the security state may shut down under certain conditions. Therefore, the electronic signature token is more humanistic and a use convenience of the electronic signature token is improved.

An authorization checking system for an electronic signature token according to embodiments of the present disclosure will be described below with reference to the drawings.

The authorization checking system for the electronic signature token comprises a first electronic signature token and a second electronic signature token. The first electronic signature token is configured to send an authorization request to the second electronic signature token, to determine whether to enter a security state according to authorization information fed back by the second electronic signature token, and to perform a payment with signature according to information of a trade after determining the first electronic signature token has entered the security state; the second electronic signature token is configured to generate the corresponding authorization information according to the authorization request, and to feed back the authorization information to the first electronic signature token.

Fig. 4 is a structural schematic diagram of an authorization checking system for an electronic signature token according to an embodiment of the present disclosure.

As shown in Fig. 4, the authorization checking system for the electronic signature token comprises a first electronic signature token 110 and a second electronic signature token 120.

Specifically, the first electronic signature token 110 is configured to send an authorization request to the second electronic signature token 120, to determine whether to enter a security state according to authorization information fed back by the second electronic signature token 120, and to perform a payment with signature according to information of a trade after determining the security state is entered; the second electronic signature token 120 is configured to generate the corresponding authorization information according to the authorization request, and to feed back the authorization information to the first electronic signature token 110.

In one embodiment of the present disclosure, the first electronic signature token 110 and the second electronic signature token 120 have matched secret keys.

In one embodiment of the present disclosure, the first electronic signature token 110 is further configured to generate a random number and to add the random number into the authorization request.

In one embodiment of the present disclosure, the second electronic signature token 120 is further configured to generate signature information according to the random number.

In one embodiment of the present disclosure, the first electronic signature token 110 is further configured to provide the random number to a user via displaying or a voice prompt.

In one embodiment of the present disclosure, the first electronic signature token 110 is further configured to decrypt the signature information according to the secret keys to generate decryption information, and to enter the security state when it is determined that the decryption information matches the random number.

In one embodiment of the present disclosure, the first electronic signature token 110 is further configured to add a payment account and/or a payment amount of the trade into the authorization request after receiving the information of the trade.

In one embodiment of the present disclosure, the second electronic signature token 120 is further configured to generate signature information according to the payment account and/or the payment amount.

A work flow of the authorization checking system for the electronic signature token will be described in detail as follows with reference to above embodiments.

For example, if an electronic trade is required to be signed, the first electronic signature token 110 is connected to a trade terminal, receives and reads the information of the trade including the payment account and/or the payment amount, generates the random number, adds the information into the authorization request and sends the authorization request to the second electronic signature token 120. The second electronic signature token 120 receives the authorization request and shows some information of the authorization request, such as the payment account, the payment amount and the random number, to the user. After the information of the trade is confirmed by the authorizer, the second electronic signature token 120 generates the authorization information according to the information of the trade and the random number of the authorization request, and feeds back the authorization information to the first electronic signature token 110. The first electronic signature token 110 decrypts the signature information according to the predetermined secret keys to generate decryption information, and performs a match comparison between the decryption information and the random number. If the decryption information matches the random number, the first electronic signature token 110 enters the security state and thus the electronic trade may be signed.

In one embodiment of the present disclosure, after the first electronic signature token 110 enters the security state, the first electronic signature token 110 exits from the security state if any one of following conditions is met: a predetermined time period is exceeded; a power failure occurs to the first electronic signature token 110; and the first electronic signature token 110 finishes a signing for the trade.

Specifically, after the first electronic signature token 110 enters the security state, if the predetermined time period is exceeded, the first electronic signature token 110 exits from the security state; or after the first electronic signature token 110 enters the security state, if the first electronic signature token 110 disconnects from a trade terminal in which case a power failure occurs to the first electronic signature token 110, the first electronic signature token 110 exits from the security state, and thus the signing will not continue; or after entering the security state and finishing a signing for a corresponding electronic trade, the first electronic signature token exits from the security state, and thus the signing will not continue.

In one embodiment of the present disclosure, there are a plurality of first electronic signature tokens 110, each of the plurality of first electronic signature tokens 110 has a unique secrete key, and the second electronic signature token 120 has a plurality of secrete keys matched with the secrete keys of the plurality of first electronic signature tokens 110.

In one embodiment of the present disclosure, there are a plurality of second electronic signature tokens 120, each of the plurality of second electronic signature tokens 120 has a unique secrete key, the first electronic signature token 110 has a plurality of secrete keys matched with the secrete keys of the plurality of second electronic signature tokens 120, and the first electronic signature token 110 sends the authorization request to the plurality of second electronic signature tokens 120 respectively.

In one embodiment of the present disclosure, if the first electronic signature token 110 receives the authorization information from all of the second electronic signature tokens 120 and all of the authorization information meets a requirement, the first electronic signature token 110 enters the security state. Alternatively, if the first electronic signature token 110 receives the authorization information from any one of the second electronic signature tokens 120 and the authorization information meets a requirement, the first electronic signature token 110 enters the security state.

In one embodiment of the present disclosure, the first electronic signature token 110 and the second electronic signature token 120 communicate via a wire or wireless internet or a direct connection.

Specifically, the first electronic signature token may send the authorization request to and receive the authorization information from the second electronic signature token via the internet, or the first electronic signature token and the second electronic signature token may exchange information via local direct connection instead of network transmission.

In one embodiment of the present disclosure, the second electronic signature token 120 has a USB socket, and a USB plug of the first electronic signature token 110 is inserted into the USB socket to establish a communication between the first electronic signature token 110 and the second electronic signature token 120.

With the authorization checking system for the electronic signature token according to embodiments of the present disclosure, the first electronic signature token sends the authorization request to the second electronic signature token, and executes the signing, while the second electronic signature token confirms the information and performs the authorization, thus ensuring a security and a convenience for an payment or an account transform of an enterprise electronic trade.

An electronic signature token for signature according to embodiments of the present disclosure will be described below with reference to the drawings.

The electronic signature token for signature comprises: a sending module configured to send an authorization request to an electronic signature token for authorization; a receiving module configured to receive an authorization information fed back from the electronic signature token for authorization; and a state control module configured to determine whether to enter a security state according to the authorization information, and to perform a payment with signature after determining the security state is entered.

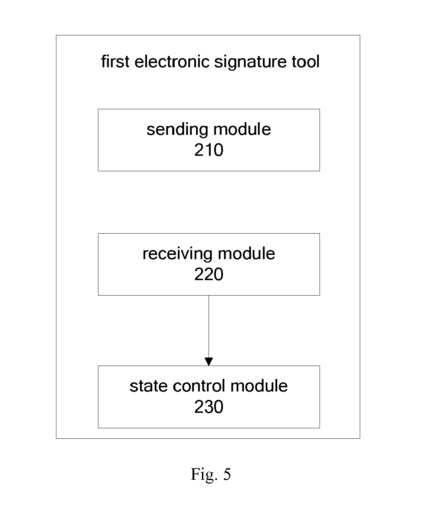

Fig. 5 is a structural schematic diagram of an electronic signature token for signature according to another embodiment of the present disclosure.

As shown in Fig. 5, the electronic signature token for signature according to embodiments of the present disclosure comprises: a sending module 210, a receiving module 220 and a state control module 230.

Specifically, the sending module 210 is configured to send an authorization request to an electronic signature token for authorization; the receiving module 220 is configured to receive an authorization information fed back from the electronic signature token for authorization; and the state control module 230 is configured to determine whether to enter a security state according to the authorization information, and to perform a payment with signature after determining the security state is entered.

In one embodiment of the present disclosure, the electronic signature token for signature and the electronic signature token for authorization have matched secret keys.

Specifically, the electronic signature token for signature receives the authorization information via the receiving module 220 and decrypts the authorization information via the matched secret keys to obtain decryption information.

With the electronic signature token for signature according to embodiments of the present disclosure, the sending module and the receiving module communicate with the electronic signature token for authorization, and the state control module controls whether to enter the security state, thus improving an availability and a security of the electronic signature token.

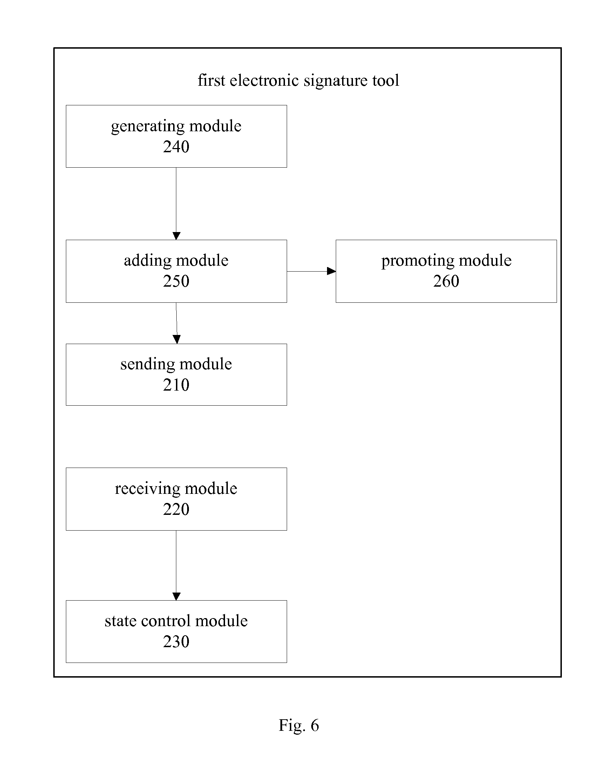

Fig. 6 is a structural schematic diagram of an electronic signature token for signature according to another embodiment of the present disclosure.

As shown in Fig. 6, the electronic signature token for signature according to embodiments of the present disclosure further comprises: a generating module 240, an adding module 250 and a promoting module 260.

Specifically, the generating module 240 is configured to generate a random number, the adding module 250 is configured to add the random number into the authorization request, and the promoting module 260 is configured to provide the random number to a user via displaying or a voice prompt.

More specifically, as to the electronic signature token for signature, the generating module 240 generates the random number, the random number is added into the authorization request via the including module 250 and sent to the electronic signature token for authorization via the sending module 210, and then is shown by the promoting module 260 to the user for confirmation via displaying or the voice prompt. The authorization information received by the receiving module 220 is also generated according to the random number, and the state control module 230 determines whether to enter the security state by performing a match comparison between the authorization information and the random number.

With the electronic signature token for signature according to embodiments of the present disclosure, by adding the random number into the authorization request, the authorization information is compared with the random number when determining whether to enter the security state, thus improving a security of the electronic signature token.

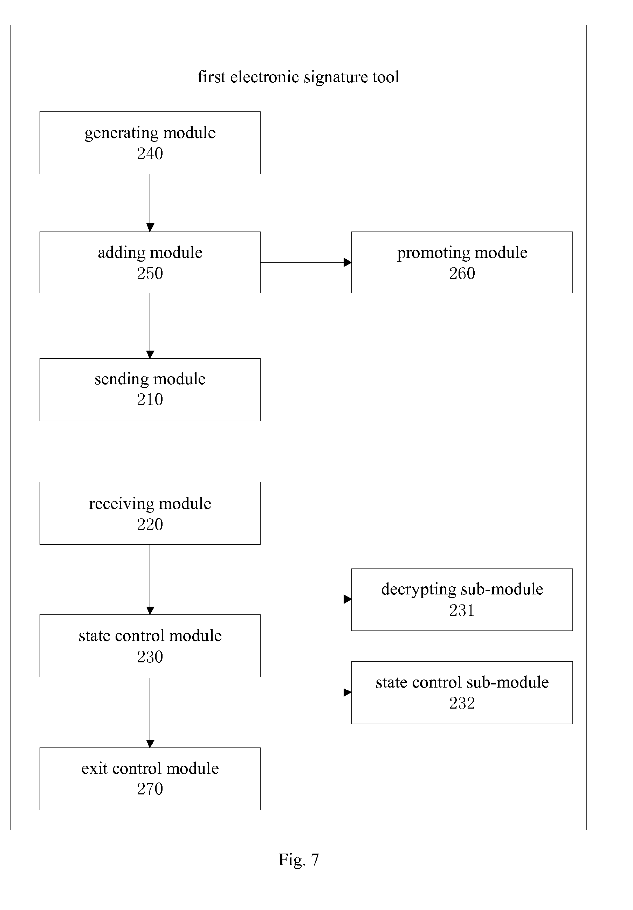

Fig. 7 is a structural schematic diagram of an electronic signature token for signature according to another embodiment of the present disclosure.

As shown in Fig. 7, the electronic signature token for signature according to embodiments of the present disclosure further comprises an exit control module 270. Meanwhile, the state control module 230 further comprises a decrypting sub-module 231 and a state control sub-module 232.

Specifically, the exit control module 270 is configured to exit from the security state, if any one of following conditions is met: a predetermined time period is exceeded; a power failure occurs to the first electronic signature token; and the first electronic signature token finishes a signing for the trade. The decrypting sub-module 231 is configured to decrypt the signature information according to the secret keys to generate decryption information, and the state control sub-module 232 is configured to enter the security state when it is determined that the decryption information matches the random number.

With the electronic signature token for signature according to embodiments of the present disclosure, the decrypting sub-module decrypts the received signature information via the providing module, the state control sub-module performs a match comparison between the decrypted signature information and the original random number to determine whether to enter the security state, and after entering the security state, the exit control module controls the electronic signature token for signature to exit from the security state, thus improving the security of the electronic signature token.

A work flow of the electronic signature token for signature will be described in detail as follows according to embodiments with reference to Figs. 5-7.

For the electronic signature token for signature, the generating module generates the random number, the random number is added into the authorization request with the information of the trade via the adding module, the random number may be shown to the user via the promoting module, the authorization request is sent to the electronic signature token for authorization via the sending module, the authorization information fed back by the electronic signature token for authorization is received by the receiving module, the received authorization information is decrypted by the decrypting sub-module in the state control module according to the secret key preset in the electronic signature token for signature, a number obtained by the decryption is compared with the random number by the state control sub-module, if the number obtained by the decryption fully matches the random number, the security state is entered and the electronic trade may be signed. The exit control module may monitor a state of the electronic signature token for signature. If the predetermined time period in the security state is exceeded; or the first electronic signature token disconnects from the trade terminal in which case a power failure occurs to the first electronic signature token; or the first electronic signature token finishes a signing, the exit control module controls the electronic signature token for signature to exit from the security state.

An electronic signature token for authorization according to embodiments of the present disclosure will be described below with reference to the drawings.

The electronic signature token for authorization comprises: a receiving module configured to receive an authorization request sent by a electronic signature token for signature; a generating module configured to generate corresponding authorization information according to the authorization request; a sending module configured to feed back the authorization information to the electronic signature token for signature; and a USB socket configured to connect with a USB plug of the electronic signature token for signature.

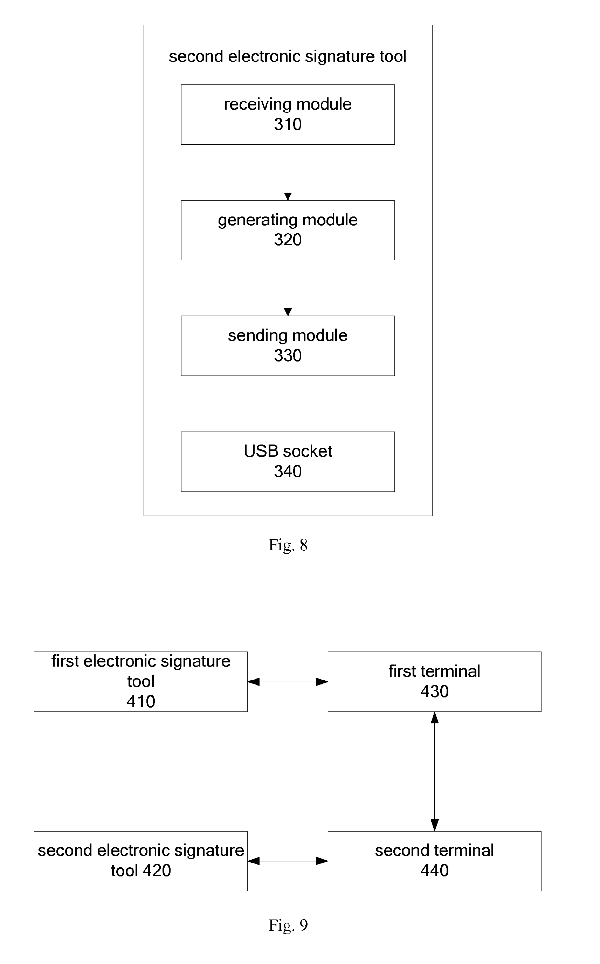

Fig. 8 is a structural schematic diagram of an electronic signature token for authorization according to an embodiment of the present disclosure.

As shown in Fig. 8, the electronic signature token for authorization according to embodiments of the present disclosure comprises: a receiving module 310, a generating module 320, a sending module 330 and a USB plug 340.

Specifically, the receiving module 310 is configured to receive an authorization request sent from the electronic signature token for signature; the generating module 320 is configured to generate a corresponding authorization information according to the authorization request; the sending module 330 is configured to feed back the authorization information to the electronic signature token for signature; and the USB socket 340 is configured to connect with the USB plug of the electronic signature token for signature.

More specifically, as to the electronic signature token for authorization, the receiving module 310 receives the authorization request from the electronic signature token for signature, the generating module 320 generates the corresponding authorization information according to the information in the authorization request, and the sending module 330 sends the authorization information to the electronic signature token for signature which applies for an authorization. If the electronic signature token for authorization and the electronic signature token for signature which applies for an authorization are in the same place, the electronic signature token for signature may be directly inserted into the USB socket 340 of the electronic signature token for authorization and connected to the trade terminal to perform a signing directly.

In one embodiment of the present disclosure, the electronic signature token for signature and the electronic signature token for authorization have matched secret keys.

With the electronic signature token for authorization according to embodiments of the present disclosure, the receiving module and the sending module communicate with the electronic signature token for signature, the corresponding authorization information is generated by the generating module 320 or by directly connecting the USB socket and the electronic signature token for signature, thus improving the availability of the electronic signature token.

An authorization checking system for an electronic signature token according to embodiments of the present disclosure will be described below with reference to the drawings.

The authorization checking system for the electronic signature token comprises: a first electronic signature token configured to generate an authorization request, to send the authorization request to a first terminal, to receive an authorization information fed back by the first terminal, and to perform a payment with signature after determining a security state is entered according to the authorization information; the first terminal configured to send the authorization request to a second terminal, and to forward the authorization information sent by the second terminal to the first electronic signature token; the second terminal configured to forward the authorization request to a second electronic signature token, and to forward the authorization information to the first terminal; the second electronic signature token configured to generate the corresponding authorization information according to the authorization request, and to send the authorization information to the second terminal.

Fig. 9 is a structural schematic diagram of an authorization checking system for an electronic signature token according to an embodiment of the present disclosure.

As shown in Fig. 9, the authorization checking system for the electronic signature token according to embodiments of the present disclosure comprises: a first electronic signature token 410, a second electronic signature token 420, a first terminal 430 connected with the first electronic signature token 410, and a second terminal 440 connected with the second electronic signature token 420. The first terminal 430 and the second terminal 440 communicate with each other.

Specifically, the first electronic signature token 410 is configured to generate an authorization request, to send the authorization request to the first terminal 430, to receive an authorization information fed back by the first terminal 430, and to perform a payment with signature after determining a security state is entered according to the authorization information. The first terminal 430 is configured to send the authorization request to the second terminal 440, and to forward the authorization information sent by the second terminal 440 to the first electronic signature token 410. The second terminal 440 is configured to forward the authorization request to the second electronic signature token 420, and to forward the authorization information to the first terminal 430. The second electronic signature token 420 is configured to generate the corresponding authorization information according to the authorization request, and to send the authorization information to the second terminal 440.

In one embodiment of the present disclosure, the first electronic signature token 410 is further configured to generate a random number and to add the random number into the authorization request, before generating the authorization request.

Specifically, before generating the authorization request, the first electronic signature token 410 generates a random number and includes the random number into the authorization request of the second electronic signature token 420.

In one embodiment of the present disclosure, the second electronic signature token 420 is further configured to generate signature information according to the random number.

Specifically, after receiving the authorization request, the second electronic signature token 420 generates the signature information according to the random number included in the authorization request.

In one embodiment of the present disclosure, the first electronic signature token 410 is further configured to decrypt the signature information according to the secret keys to generate decryption information, and to enter the security state when it is determined that the decryption information matches the random number.

Specifically, after receiving the signature information, the first electronic signature token 410 decrypts the signature information according to the predetermined secret keys to generate the decryption information, and performs a match comparison between the decryption information and the random number. If the decryption information fully matches the random number, the first electronic signature token 110 enters the security state.

In one embodiment of the present disclosure, the first electronic signature token 410 is further configured to add a payment account and/or a payment amount related to information of a trade into the authorization request, after receiving the information of the trade.

Specifically, the first electronic signature token 410 obtains the information of the trade, such as related payment account and/or payment amount, and adds the information into the authorization request.

In one embodiment of the present disclosure, the second electronic signature token 420 is further configured to generate signature information according to the payment account and/or the payment amount.

Specifically, after receiving the authorization request, the second electronic signature token 420 obtains the payment account and/or the payment amount from the authorization request, and generates the signature information according to the information of the trade.

In one embodiment of the present disclosure, after entering the security state, the first electronic signature token 410 exits from the security state if any one of following conditions is met: a predetermined time period is exceeded; a power failure occurs to the first electronic signature token 410; and the first electronic signature token 410 finishes a signing for the trade.

Specifically, after the first electronic signature token 410 enters the security state, if the predetermined time period is exceeded, the first electronic signature token 410 exits from the security state and thus the signing will not continue; or after the first electronic signature token 410 enters the security state, if the first electronic signature token 410 disconnects from a trade terminal, which means a power failure occurs to the first electronic signature token 410, the first electronic signature token 410 exits from the security state and thus the signing will not continue; or after entering the security state and finishing a signing for a corresponding electronic trade, the first electronic signature token 410 exits from the security state and thus the signing will not continue.

In one embodiment of the present disclosure, there are a plurality of first electronic signature tokens 410, each of the plurality of first electronic signature tokens 410 has a unique secrete key, and the second electronic signature token 420 has a plurality of secrete keys matched with the secrete keys of the plurality of first electronic signature tokens 410.

Specifically, there may be a plurality of first electronic signature tokens 410, and there is a unique secrete key for decryption preset in each of the plurality of first electronic signature tokens 410, which may be provided to a plurality of persons so as to allow trades in different places. And there are secrete keys stored in the second electronic signature token 420 and matched with the secrete keys of all of the first electronic signature tokens 410, and thus authorizations for different electronic signature tokens may be performed.

In one embodiment of the present disclosure, there are a plurality of second electronic signature tokens 420, each of the plurality of second electronic signature tokens 420 has a unique secrete key, the first electronic signature token 410 has a plurality of secrete keys matched with the secrete keys of the plurality of second electronic signature tokens 420, and the first electronic signature token 410 sends the authorization request to the plurality of second electronic signature tokens 420 respectively.

Specifically, there may be a plurality of second electronic signature tokens 420, there are a plurality of secrete keys stored in each of the plurality of second electronic signature tokens 420 and matched with the secrete key in each of the plurality of first electronic signature tokens 410, and thus authorizations for different electronic signature tokens may be performed. If the first electronic signature token 410 receives the authorization information from all of the second electronic signature tokens 420 and all of the authorization information meets a requirement, the first electronic signature token 410 enters the security state. Alternatively, if the first electronic signature token 410 receives the authorization information from any one of the second electronic signature tokens 420 and the authorization information meets a requirement, the first electronic signature token 410 enters the security state.

With the authorization checking system for the electronic signature token according to embodiments of the present disclosure, the first electronic signature token performs the signing, the second electronic signature token authorizes the first electronic signature token, and the two electronic signature tokens may be connected with different terminals and communicate with each other via the terminals, thus improving a security and an availability of the system during the electronic trade.

An authorization checking method for an electronic signature token according to embodiments of the present disclosure will be described below with reference to the drawings.

The authorization checking method for the electronic signature token comprises following steps: sending by a first electronic signature token an authorization request including a request information to a second electronic signature token via a network, when the first electronic signature token needs to execute a signature function; authorizing the authorization request sent by the first electronic signature token, and feeding back the authorization information to the first electronic signature token by the second electronic signature token; decrypting the authorization information, and performing a match verification between the decrypted authorization information and the request information to determine whether the authorizing is successful by the first electronic signature token; if the authorizing is successful, entering a security state; if the authorizing is unsuccessful, disallowing to enter the security state, and resending the authorization request to the second electronic signature token; and exiting from the security state by the first electronic signature token if a power failure occurs to the first electronic signature token during the security state.

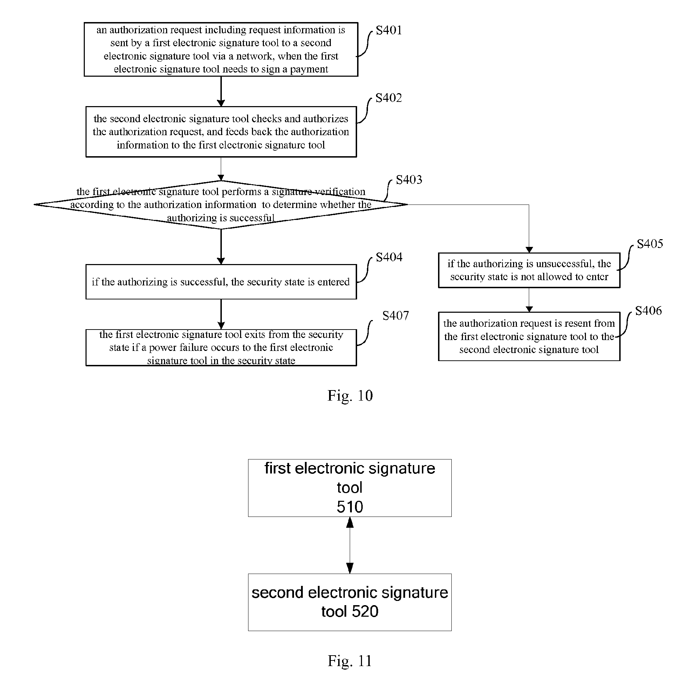

Fig. 10 is a flow chart of an authorization checking method for an electronic signature token according to an embodiment of the present disclosure.

As shown in Fig. 10, the authorization checking method for the electronic signature token comprises following steps.

At step S401, an authorization request including request information is sent by a first electronic signature token to a second electronic signature token via a network, when the first electronic signature token needs to execute a signature function.

Specifically, when needing to execute a signature function, the first electronic signature token generates the authorization request including the request information and sends the authorization request to the second electronic signature token located at another place via a network.

At step S402, the second electronic signature token authorizes the authorization request sent by the first electronic signature token, and feeds back the authorization information to the first electronic signature token.

Specifically, the second electronic signature token receives the authorization request, obtains and checks the request information included in the authorization request, generates the corresponding authorization information according to the authorization request, and feeds back the authorization information to the first electronic signature token for authorization.

At step S403, after decrypting the authorization information, the first electronic signature token performs a match verification between the decrypted authorization information and the request information to determine whether the authorizing is successful.

Specifically, firstly the first electronic signature token decrypts the authorization information according to the preset secret keys to obtain the decrypted authorization information, and then performs a match comparison between the decrypted authorization information and the request information previously generated and included in the authorization request to check whether the authorizing is successful.

At step S404, if it is determined that the authorizing is successful, the security state is entered.

Specifically, if the decrypted authorization information and the request information fully match each other, the security state is entered, and the trade may be signed.

At step S405, if it is determined that the authorizing is not successful, the security state is not allowed to enter.

Specifically, if the decrypted authorization information and the request information do not fully match each other, the security state is not allowed to enter, and the trade may not be signed.

At step S406, if the signature authorization is not successful, the authorization request may be resent by the first electronic signature token to the second electronic signature token.

Specifically, when the signature authorization is not successful and the signing is not allowed, the first electronic signature token may feed back to the second electronic signature token and resend the authorization request.

At step S407, the first electronic signature token exits from the security state if a power failure occurs to the first electronic signature token during the security state.

Specifically, after entering the security state and disconnecting from the trade terminal, the first electronic signature token 410 exits from the security state, and thus a signing for the trade cannot be performed.

In one embodiment of the present disclosure, the authorization request comprises a random number generated by the first electronic signature token, and the authorization information comprises related signature information obtained by the second electronic signature token signing the random number.

Specifically, the first electronic signature token also generates a random number while generating the authorization request, adds the random number into the authorization request, and sends the authorization request to the second electronic signature token. The second electronic signature token generates the corresponding authorization information according to the random number and signs the random number.

In one embodiment of the present disclosure, the second electronic signature token has a USB socket, the second electronic signature token may authorize the first electronic signature token via a point-to-point connection authorization, and a random number generated by the point-to-point connection authorization may be confidential or shown to a user.

Specifically, if the first electronic signature token and the second electronic signature token are at the same place, they may connect with each other by directly inserting the first electronic signature token into the USB socket of the second electronic signature token instead of communicating via internet. The random number generated during the authorization of the two electronic signature tokens connected by the USB socket may be directly and internally generated and verified, without informing the user. Alternatively, the random number may also be shown to the user via displaying or a voice prompt.

In one embodiment of the present disclosure, there may be a plurality of first electronic signature tokens, and there also may be a plurality of second electronic signature tokens.

Specifically, there may be a plurality of first electronic signature tokens which may be provided to a plurality of persons so as to allow trades at different places, while the second electronic signature tokens may correspondingly authorize different electronic signature tokens. There also may be a plurality of second electronic signature tokens so as to authorize the different electronic signature tokens. The use may set the following rules: if the first electronic signature token receives the authorization information from all of the second electronic signature tokens and all of the authorization information meets a requirement, the first electronic signature token enters the security state; or, if the first electronic signature token receives the authorization information from any one of the second electronic signature tokens and the authorization information meets a requirement, the first electronic signature token enters the security state.

With the authorization checking method for the electronic signature token according to embodiments of the present disclosure, the second electronic signature token authorizes the first electronic signature token, the first electronic signature token signs an electronic trade, and the authorization information is verified by the random number, such that the electronic trade may be accomplished by a trader and in an absence of an authorizer, and thus increasing a use convenience of the electronic signature token, reducing a risk of personal transferring of an enterprise account by the trader, and improving a security of an electronic trade of the enterprise. The first electronic signature token may resend the authorization request if the authorization fails, thus increasing an availability of the electronic signature token.

An authorization checking system for an electronic signature token according to embodiments of the present disclosure will be described below with reference to the drawings.

The authorization checking system for the electronic signature token comprises: one or more first electronic signature tokens and one or more second electronic signature tokens. The first electronic signature tokens are configured to send an authorization request including a random number to the second electronic signature tokens, to determine whether a signature is correct according to authorization information fed back by the second electronic signature tokens, and to enter a security state to perform the signing for the electronic trade, when performing a signing for an electronic trade. The second electronic signature tokens are configured to generate the corresponding authorization information according to the authorization request sent by the first electronic signature tokens, and to feed back the authorization information to the first electronic signature tokens.

Fig. 11 is a structural schematic diagram of an authorization checking system for an electronic signature token according to an embodiment of the present disclosure.

As shown in Fig. 11, the authorization checking system for the electronic signature token according to an embodiment of the present disclosure comprises one or more first electronic signature tokens 510 and one or more second electronic signature tokens 520.

Specifically, when performing a signing for an electronic trade, the first electronic signature tokens 510 are configured to send an authorization request including a random number to the second electronic signature tokens 520, to determine whether a signature is correct according to authorization information fed back by the second electronic signature tokens 520, and to enter a security state to perform the signing for the electronic trade; the second electronic signature tokens 520 are configured to generate the corresponding authorization information according to the authorization request sent by the first electronic signature tokens 510, and to feed back the authorization information to the first electronic signature tokens 510.

More specifically, there may be a plurality of first electronic signature tokens 510, which may be provided to a plurality of persons so as to allow trades at different places, while the second electronic signature token 520 may authorize different electronic signature tokens. There also may be a plurality of second electronic signature tokens 520 so as to authorize the different electronic signature tokens. The user may set the following rules: if the first electronic signature token 510 receives the authorization information from all of the second electronic signature tokens 520 and all of the authorization information meets a requirement, the first electronic signature token 510 enters the security state; or, if the first electronic signature token 510 receives the authorization information from any one of the second electronic signature tokens 520 and the authorization information meets a requirement, the first electronic signature token 510 enters the security state.

In one embodiment of the present disclosure, the first electronic signature token 510 exits from the security state if a power failure occurs to the first electronic signature token 510 during the security state.

Specifically, after entering the security state, if the first electronic signature token 510 is extracted from the trade terminal and the first electronic signature token 510 has a power failure, it exits from the security state. Even inserted into the trade terminal again, the first electronic signature token 510 cannot enter the security state.

In one embodiment of the present disclosure, the second electronic signature tokens 520 further comprise a USB interface docking to the first electronic signature tokens 510 and used for a point-to-point connection authorization, and the random number generated by a USB interface docking authorization may be either shown or not shown to a user.

Specifically, if the first electronic signature token 510 and the second electronic signature token 520 are at the same place, they may connect with each other by directly inserting the first electronic signature token 510 into the USB socket of the second electronic signature token 520 instead of communicating via internet. The random number generated during the authorization of the two electronic signature tokens connected by the USB socket may be directly and internally generated and verified, without informing the user. Alternatively, the random number may also be shown to the user via displaying or a voice prompt.

With the authorization checking system for the electronic signature token according to embodiments of the present disclosure, the first electronic signature token sends the authorization request to the second electronic signature token, and executes the signing, while the second electronic signature token confirms the information and performs the authorization. In the meantime, the first electronic signature token and the second electronic signature token may communicate via various modes, thus ensuring a security and a convenience for a payment or an account transform of an enterprise electronic trade. Furthermore, different numbers of the first electronic signature tokens and the second electronic signature tokens may be provided, and thus the security may be significantly improved.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. An authorization checking method for an electronic signature token, comprising:
sending by a first electronic signature token an authorization request to a second electronic signature token;
generating a corresponding authorization information according to the authorization request, and feeding back the authorization information to the first electronic signature token by the second electronic signature token;
determining whether to enter a security state by the first electronic signature token according to the authorization information; and
if it is determined that the first electronic signature token has entered the security state, activating a signature function by the first electronic signature token.

2. The authorization checking method for an electronic signature token according to claim 1, wherein the first electronic signature token and the second electronic signature token have matched secret keys.

3. The authorization checking method for an electronic signature token according to claim 1 or 2, wherein the authorization request comprises a random number generated by the first electronic signature token, and the authorization information comprises a signature information generated by the second electronic signature token according to the random number.

4. The authorization checking method for an electronic signature token according to claim 3, wherein determining whether to enter a security state by the first electronic signature token according to the authorization information comprises:
decrypting the signature information by the first electronic signature token to generate a decryption information;
detecting by the first electronic signature token whether the decryption information matches the random number; and
if it is determined that the decryption information matches the random number, entering the security state by the first electronic signature token.

5. The authorization checking method for an electronic signature token according to claim 3, further comprising:
providing the random number to a user via displaying or a voice prompt by the first electronic signature token.

6. The authorization checking method for an electronic signature token according to claim 2, wherein the authorization request comprises a payment account and/or a payment amount of a trade, and the authorization information comprises a signature information generated by the second electronic signature token according to the payment account and/or the payment amount.

7. The authorization checking method for an electronic signature token according to claim 6, further comprising:
displaying the payment account and/or the payment amount in the second electronic signature token.

8. The authorization checking method for an electronic signature token according to claim 6, wherein determining whether to enter a security state by the first electronic signature token according to the authorization information comprises:
decrypting the signature information by the first electronic signature token according to the secret keys to generate a decryption information;
detecting by the first electronic signature token whether the decryption information matches the payment account and/or the payment amount; and
if it is determined that the decryption information matches the payment account and/or the payment amount, entering the security state by the first electronic signature token.

9. The authorization checking method for an electronic signature token according to claim 6, after the first electronic signature token has entered the security state, further comprising:
performing by the first electronic signature token a signing for a trade matched with the payment account and/or the payment amount according to the payment account and/or the payment amount, and exiting from the security state after finishing the signing;
when a next trade is performed, exiting from the security state if a payment account and/or a payment amount of the next trade required to be signed mismatches the payment account and/or the payment amount.

10. The authorization checking method for an electronic signature token according to any of claims 1-8, after the first electronic signature token has entered the security state, further comprising:
exiting from the security state by the first electronic signature token in a predetermined time period; or
exiting from the security state by the first electronic signature token if a power failure occurs; or
exiting from the security state by the first electronic signature token after finishing a signing.

11. The authorization checking method for an electronic signature token according to any of claims 1-10, wherein a plurality of first electronic signature tokens are provided, each of the plurality of first electronic signature tokens has a unique secrete key, and the second electronic signature token has a plurality of secrete keys matched with the secrete keys of the plurality of first electronic signature tokens.

12. The authorization checking method for an electronic signature token according to any of claims 1-10, wherein a plurality of second electronic signature tokens are provided, each of the plurality of second electronic signature tokens has a unique secrete key, the first electronic signature token has a plurality of secrete keys matched with the secrete keys of the plurality of second electronic signature tokens, and the first electronic signature token is configured to send the authorization request to the plurality of second electronic signature tokens respectively.

13. The authorization checking method for an electronic signature token according to claim 12, wherein
if the authorization information from all of the plurality of second electronic signature tokens is received by the first electronic signature token and all of the authorization information meets a requirement, the first electronic signature token enters the security state; or
if the authorization information from any one of the plurality of second electronic signature tokens is received by the first electronic signature token and the authorization information meets a requirement, the first electronic signature token enters the security state.

14. The authorization checking method for an electronic signature token according to claim 1, wherein the first electronic signature token and the second electronic signature token are configured to communicate via a wire or wireless internet or a direct connection.

15. The authorization checking method for an electronic signature token according to claim 1, wherein the second electronic signature token has a USB socket, and a USB plug of the first electronic signature token is inserted into the USB socket to establish a communication between the first electronic signature token and the second electronic signature token.

16. An authorization checking system for an electronic signature token, comprising a first electronic signature token and a second electronic signature token, wherein
the first electronic signature token is configured to send an authorization request to the second electronic signature token, to determine whether to enter a security state according to an authorization information fed back by the second electronic signature token, and to perform a payment with signature according to an information of a trade after determining the first signature tool has entered the security state;
the second electronic signature token is configured to generate the corresponding authorization information according to the authorization request, and to feed back the authorization information to the first electronic signature token.

17. The authorization checking system for an electronic signature token according to claim 16, wherein the first electronic signature token and the second electronic signature token have matched secret keys.

18. The authorization checking system for an electronic signature token according to claim 17, wherein the first electronic signature token is further configured to generate a random number and to add the random number into the authorization request.

19. The authorization checking system for an electronic signature token according to claim 18, wherein the second electronic signature token is further configured to generate a signature information according to the random number.

20. The authorization checking system for an electronic signature token according to claim 18, wherein the first electronic signature token is further configured to provide the random number to a user via displaying or a voice prompt.

21. The authorization checking system for an electronic signature token according to claim 17, wherein the first electronic signature token is further configured to decrypt the signature information according to the secret keys to generate a decryption information, and to enter the security state after determining that the decryption information matches the random number.

22. The authorization checking system for an electronic signature token according to claim 21, wherein the first electronic signature token is further configured to add a payment account and/or a payment amount of the trade into the authorization request after receiving the information of the trade.

23. The authorization checking system for an electronic signature token according to claim 22, wherein the second electronic signature token is further configured to generate a signature information according to the payment account and/or the payment amount.

24. The authorization checking system for an electronic signature token according to claim 16, wherein after the first electronic signature token has entered the security state, the first electronic signature token is configured to exit from the security state if any one of following conditions is met:
a predetermined time period is exceeded;
a power failure occurs to the first electronic signature token; and
the first electronic signature token finishes a signing for the trade.

25. The authorization checking system for an electronic signature token according to claim 16, wherein a plurality of first electronic signature tokens are provided, each of the plurality of first electronic signature tokens has a unique secrete key, and the second electronic signature token has a plurality of secrete keys matched with the secrete keys of the plurality of first electronic signature tokens.

26. The authorization checking system for an electronic signature token according to claim 16, wherein a plurality of second electronic signature tokens are provided, each of the plurality of second electronic signature tokens has a unique secrete key, the first electronic signature token has a plurality of secrete keys matched with the secrete keys of the plurality of second electronic signature tokens, and the first electronic signature token is configured to send the authorization request to the plurality of second electronic signature tokens respectively.

27. The authorization checking system for an electronic signature token according to claim 26, wherein
if the authorization information from all of the plurality of second electronic signature tokens is received by the first electronic signature token and all of the authorization information meets a requirement, the first electronic signature token enters the security state; or
if the authorization information from any one of the plurality of second electronic signature tokens is received by the first electronic signature token and the authorization information meets a requirement, the first electronic signature token enters the security state.

28. The authorization checking system for an electronic signature token according to claim 16, wherein the first electronic signature token and the second electronic signature token are configured to communicate via a wire or wireless internet or a direct connection.

29. The authorization checking system for an electronic signature token according to claim 16, wherein the second electronic signature token has a USB socket, and a USB plug of the first electronic signature token is inserted into the USB socket to establish a communication between the first electronic signature token and the second electronic signature token.

30. An electronic signature token for signature, comprising:
a sending module configured to send an authorization request to an electronic signature token for authorization;
a receiving module configured to receive an authorization information fed back by the electronic signature token for authorization; and
a state control module configured to determine whether to enter a security state according to the authorization information, and to perform a payment with signature after determining the security state is entered.

31. The electronic signature token for signature according to claim 30, wherein the electronic signature token for signature and the electronic signature token for authorization have matched secret keys.

32. The electronic signature token for signature according to claim 31, further comprising:
a generating module configured to generate a random number; and
an adding module configured to add the random number into the authorization request.

33. The electronic signature token for signature according to claim 32, further comprising:
a promoting module configured to provide the random number to a user via displaying or a voice prompt.

34. The electronic signature token for signature according to claim 32, wherein the state control module further comprises:
a decrypting sub-module configured to decrypt the signature information according to the secret keys to generate a decryption information; and
a state control sub-module configured to enter the security state when determining that the decryption information matches the random number.

35. The electronic signature token for signature according to claim 31, further comprising:
an exit control module configured to exit from the security state, if any one of following conditions is met:
a predetermined time period is exceeded;
a power failure occurs to the first electronic signature token; and
the first electronic signature token finishes a signing for the trade.

36. An electronic signature token for authorization, comprising:
a receiving module configured to receive an authorization request sent by an electronic signature token for signature;
a generating module configured to generate a corresponding authorization information according to the authorization request; and
a sending module configured to feed back the authorization information to the electronic signature token for signature.

37. The electronic signature token for authorization according to claim 36, wherein the electronic signature token for signature and the electronic signature token for authorization have matched secret keys.

38. The electronic signature token for authorization according to claim 36, further comprising:
a USB socket configured to connect with a USB plug of the electronic signature token for signature.

39. An authorization checking system for an electronic signature token, comprising a first electronic signature token, a second electronic signature token, a first terminal connected with the first electronic signature token, and a second terminal connected with the second electronic signature token, the first terminal and the second terminal communicating with each other, wherein
the first electronic signature token is configured to generate an authorization request, to send the authorization request to the first terminal, to receive an authorization information fed back by the first terminal, and to perform a payment with signature after determining a security state is entered according to the authorization information;
the first terminal is configured to send the authorization request to the second terminal, and to forward the authorization information sent by the second terminal to the first electronic signature token;
the second terminal is configured to forward the authorization request to the second electronic signature token, and to forward the authorization information to the first terminal; and
the second electronic signature token is configured to generate the corresponding authorization information according to the authorization request, and to send the authorization information to the second terminal.

40. The authorization checking system for an electronic signature token according to claim 39, wherein the first electronic signature token is further configured to generate a random number and to add the random number into the authorization request before generating the authorization request.

41. The authorization checking system for an electronic signature token according to claim 40, wherein the second electronic signature token is further configured to generate a signature information according to the random number.

42. The authorization checking system for an electronic signature token according to claim 39, wherein the first electronic signature token is further configured to decrypt the signature information according to the secret keys to generate a decryption information, and to enter the security state after determining that the decryption information matches the random number.

43. The authorization checking system for an electronic signature token according to claim 42, wherein the first electronic signature token is further configured to add a payment account and/or a payment amount related to an information of a trade into the authorization request after receiving the information of the trade.

44. The authorization checking system for an electronic signature token according to claim 43, wherein the second electronic signature token is further configured to generate a signature information according to the payment account and/or the payment amount.

45. The authorization checking system for an electronic signature token according to claim 39, wherein after the first electronic signature token has entered the security state, the first electronic signature token is configured to exit from the security state after if any one of following conditions is met:
a predetermined time period is exceeded;
a power failure occurs to the first electronic signature token; and
the first electronic signature token finishes a signing for the trade.

46. The authorization checking system for an electronic signature token according to claim 39, wherein a plurality of first electronic signature tokens are provided, each of the plurality of first electronic signature tokens has a unique secrete key, and the second electronic signature token has a plurality of secrete keys matched with the secrete keys of the plurality of first electronic signature tokens.

47. The authorization checking system for an electronic signature token according to claim 39, wherein a plurality of second electronic signature tokens are provided, each of the plurality of second electronic signature tokens has a unique secrete key, the first electronic signature token has a plurality of secrete keys matched with the secrete keys of the plurality of second electronic signature tokens, and the first electronic signature token is configured to send the authorization request to the plurality of second electronic signature tokens respectively.

48. An authorization checking method for an electronic signature token, comprising:
sending by a first electronic signature token an authorization request including a request information to a second electronic signature token via a network, when the first electronic signature token needs to execute a signature function;
authorizing the authorization request sent by the first electronic signature token and feeding back the authorization information to the first electronic signature token by the second electronic signature token;
decrypting the authorization information and performing a match verification between the decrypted authorization information and the request information to detect whether the authorizing is successful by the first electronic signature token;
if it is determined that the authorizing is successful, entering a security state;
if it is determined that the authorizing is unsuccessful, disallowing to enter the security state, and resending by the first electronic signature token the authorization request to the second electronic signature token; and
exiting from the security state by the first electronic signature token if a power failure occurs to the first electronic signature token in the security state.

49. The authorization checking method for an electronic signature token according to claim 48, wherein the authorization request comprises a random number generated by the first electronic signature token, and the authorization information comprises a related signature information obtained by the second electronic signature token signing the random number.

50. The authorization checking method for an electronic signature token according to claim 48, wherein the second electronic signature token is configured to authorize the first electronic signature token via a trade terminal, the second electronic signature token has a USB socket, the second electronic signature token is configured to authorize the first electronic signature token via a point-to-point connection authorization, and a random number generated by the point-to-point connection authorization is confidential or shown to a user.

51. The authorization checking method for an electronic signature token according to claim 50, wherein a plurality of first electronic signature tokens and a plurality of second electronic signature tokens are provided.

52. An authorization checking system for an electronic signature token, comprising one or more first electronic signature tokens and one or more second electronic signature tokens, wherein
when performing a signing for an electronic trade, the first electronic signature tokens are configured to send an authorization request including a random number to the second electronic signature tokens, to determine whether a signature is correct according to an authorization information fed back by the second electronic signature tokens, and to enter a security state to perform the signing for the electronic trade; and
the second electronic signature tokens are configured to generate the corresponding authorization information according to the authorization request sent by the first electronic signature tokens, and to feed back the authorization information to the first electronic signature tokens.

53. The authorization checking system for an electronic signature token according to claim 52, wherein the first electronic signature tokens exit from the security state if a power failure occurs to the first electronic signature tokens in the security state.

54. The authorization checking system for an electronic signature token according to claim 52, wherein the second electronic signature tokens further comprise a USB interface docking to the first electronic signature tokens and used for a point-to-point connection authorization, and the random number generated by a USB interface docking authorization is either shown or not shown to a user.
